# EUROPEAN PATENT SPECIFICATION

(11) **EP 2 267 681 B1**
(45) Date of publication and mention of the grant of the patent: **14.08.2019**
(21) Application number: 10250986.6
(22) Date of filing: 27.05.2010
(51) Int. Cl.: G08G 1/14

(54) **Street parking community application and method**
Gemeinschaftsanwendung und Verfahren für Straßenparkplatzsuche
Application de communauté de stationnement dans la rue et procédé

(30) Priority: 01.06.2009 US 455340
(43) Date of publication of application: 29.12.2010
(73) Proprietor: HERE Global B.V., 5611 ZT Eindhoven (NL)
(72) Inventor: Bandukwala, Naveed, Hinsdale, IL 60521 (US)
(74) Representative: Potter Clarkson

(56) References cited:
- EP-A1- 1 234 735
- EP-A2- 1 006 503
- US-A- 5 751 973
- US-A1- 2007 008 181

## Description

### BACKGROUND OF THE INVENTION

The present invention relates to a method and system that enables users to inform each other about available parking spaces along streets.

Many people who live or work in urban areas, or who visit urban areas, rely on street parking. In many areas, available on-street parking is in high demand. It is common for many drivers to cruise up and down streets trying to find a parking space near their destinations. This is time-consuming, inefficient and wasteful. Drivers seeking parking spaces may deliberately modify their times of arrival or departure in order to account for the need to find an available parking space. Sometimes, a driver seeking a parking space will take one that is not close to his destination, just because he cannot tell if a more convenient, closer space is available.

Accordingly, it is an objective to provide a system and method that facilitates finding on-street parking spaces. Further, it is an objective to provide a system and method that facilitates finding on-street parking that is reasonably convenient to a location of interest to a user.

EP 1,006,503 discloses a method of automatically acquiring data relating to occupied parking spaces within a traffic network. US2007/008181 describes a parking space information system.

### SUMMARY OF THE INVENTION

To address these and other objectives, the present invention comprises a system and method that facilitate finding on-street parking. A community of users has an application on their portable wireless communications devices that allows them to inform each other when vacating on-street parking spaces. When one user operates his automobile to vacate an on-street parking space, a message is transmitted wirelessly that indicates the position of the parking space and the time. Another user in the community is driving around looking for a parking space in a desired area. The desired area may correspond to the current position of the other user or may be specified by the other user. The availability of the parking space vacated by the one user is matched with the desired area of the other user. A message indicating the location of the parking space being vacated by the one user in the desired area is transmitted to the other user for display on the portable wireless communications device of the other user. The invention is defined by the appended claims.

According to one aspect of the invention, there is provided a portable wireless communications device comprising a feature that (1) transmits a message indicating that an on-street parking space that had been occupied by a vehicle operated by a user of the portable wireless communication device has become available and (2) receives notifications that on-street parking spaces in a desired area have become available when other users of portable wireless communications devices that have the same feature indicate that on-street parking spaces occupied by vehicles operated by the other users have become available.

In one embodiment, the portable wireless communications device further comprises: a positioning system that determines a position of the portable wireless communications device and provides the position in the message indicating that the on-street parking space has become available.

In one embodiment, the feature further allows the user to specify the desired area.

In one embodiment, the feature determines the desired area to be an area around the user. The portable wireless communication device may further comprise: a positioning system that determines the area around the user.

In one embodiment, the feature further indicates how long each available on-street parking space has been posted.

In one embodiment, the feature further allows specification of how long each available on-street parking space has been posted.

In one embodiment, the feature further allows identification of available on-street parking spaces of a specified size. The specified size may include large SUV, medium sedan, subcompact, and any size.

In one embodiment, the feature further allows identification of an on-street parking space prior to the space being vacated by a vehicle.

In one embodiment, the feature further provides route guidance to at least one of the on-street parking spaces in the specific area.

According to an aspect of the invention, there is provided a software application stored on computer-readable media in portable communications devices, wherein the software application enables each user of one of the portable communications devices to transmit notice when vacating an on-street parking space and a position thereof, and further that allows each user of one of the portable communications devices to receive notification of positions of parking spaces made available by others of the users of the portable communications devices when said others provide notice when vacating on-street parking spaces.

In one embodiment, the position of each portable communications device when vacating an on-street parking space is obtained from a positioning system included in the portable wireless communications device.

In one embodiment, the software application further comprises a feature that enables a user to specify a desired area about which to receive notification of positions of parking spaces made available by others of the users of the portable communications devices when said others transmit notice when vacating on-street parking spaces.

In one embodiment, the software application further comprises a feature that indicates how long each available on-street parking space has been posted.

In one embodiment, the software application further comprises a feature that allows a user to specify how long each available on-street parking space has been posted.

In one embodiment, the software application further comprises a feature that allows identification of available on-street parking spaces of a specified size, wherein the specified size includes large SUV, medium sedan, subcompact, and any size.

In one embodiment, the software application further comprises a feature that allows identification of an on-street parking space prior to the space being vacated by a vehicle.

In one embodiment, the software application further comprises a feature that provides route guidance for a user to travel to at least one of the parking spaces made available by others of the users when said others provide notice when vacating on-street parking spaces.

In one embodiment, the software application further comprises a feature that calculates a route for a user to travel to at least one of the parking spaces made available by others of the users when said others provide notice when vacating on-street parking spaces.

According to an aspect of the invention, there is provided a system for informing users of portable communications devices about available on-street parking spaces for vehicles, the system comprising: a plurality of portable communications devices, each of which includes a positioning system that determines a position of the portable communications device and a parking application that allows a user of one of the plurality of portable communications devices to send a notification message that the user is making a parking space available and the location thereof and that allows the user to receive notifications about on-street parking spaces made available by users of others of the plurality of portable communications devices and the respective locations thereof.

According to an aspect of the invention, there is provided a method of finding on-street parking comprising: using a portable communications device to receive notification of positions of parking spaces made available by other users of portable communications devices when said others indicate when vacating on-street parking spaces, and using the portable communications device to notify others when vacating an on-street parking space and a position thereof.

According to an aspect of the invention, there is provided a method of facilitating finding on-street parking comprising: with an application executed on a server connected to a data network, receiving notification messages from users of portable communications devices, wherein each notification message indicates that a user of the portable communications device has operated a vehicle to vacate an on-street parking space and identifies a location of the on-street parking space; with the application executed on the server, receiving inquiry messages from users of portable communications devices, wherein each inquiry message indicates that a user of the respective portable communications device is seeking an on-street parking space in a desired area; with the application executed on the server, matching desired areas from inquiry messages with locations of vacated on-street parking spaces identified in notification messages; and with the application executed on the server, transmitting response messages to the inquiry messages, wherein each of said response messages identifies the location of one or more of the vacated on-street parking spaces in the desired area identified in the corresponding inquiry message.

In one embodiment, the method further comprises: with the application executed on the server, keeping track of a time associated with each vacated on-street parking space.

In one embodiment, each of said response messages indicates how long each vacated parking space has been available.

In one embodiment, the method further comprises: with the application executed on the server, keeping track of a size associated with each vacated on-street parking space. Each of said response messages may indicate the size associated with each vacated parking space.

In one embodiment, the method further comprises: with the application executed on the server, facilitating a payment between users for swapping a parking space.

### BRIEF DESCRIPTION OF THE DRAWINGS

Figure 1 is an illustration showing an overhead view of several streets in an area.
Figure 2 is an illustration showing the mobile device of the user looking for a parking space in Figure 1.
Figure 3 is an illustration similar to Figure 2 showing a menu on the mobile device for selecting parking space time preferences.
Figure 4 is an illustration similar to Figure 2 showing a menu on the mobile device for selecting parking space size preferences.
Figure 5 shows the same overhead view of a several streets in an urban area as in Figure 1 and is used in connection with the description of another way that the community parking space application can be used.

### DETAILED DESCRIPTION OF THE DESCRIPTION OF THE PRESENTLY PREFERRED EMBODIMENTS

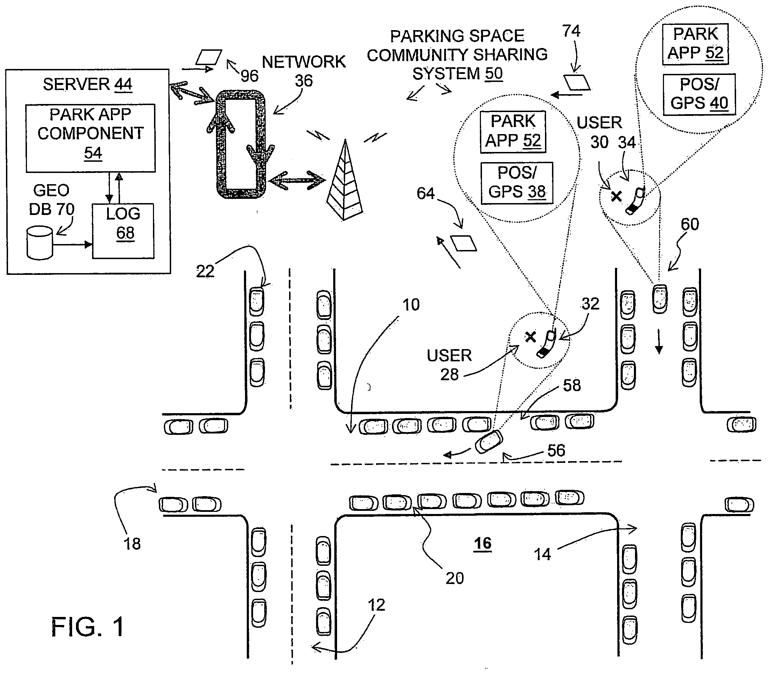

Figure 1 is an illustration showing an overhead view of a several streets 10, 12 and 14 in an area 16. The area 16 is part of an urban area, such as Chicago, Los Angeles, Amsterdam, London, Buenos Aires, etc., but alternatively may be a suburban or non-urban area. The area 16 may be a residential area, a commercial area or a mix of residential and commercial. The area 16 is in a jurisdiction (city, town, etc.) that allows on-street parking on streets. Accordingly, vehicles 18, 20, 22 ... are parked along the streets 10, 12 and 14. In many urban areas, there is high demand for on-street parking. Accordingly, as shown in Figure 1, all the parking spaces along the streets 10, 12 and 14 are occupied.

In Figure 1, a first user 28 and a second user 30 have and operate wireless communications devices 32 and 34, respectively. The wireless communications devices 32 and 34 may be cell phones, smart phones or other devices that can be carried by a person and that have the capability to transmit and receive data over a network 36, a portion of which is a wireless network. Examples of suitable wireless communications devices include the Nokia E71 model phone, the Apple iPhone, Blackberry phones, etc. Alternatively, the wireless communications devices 32 and 34 may be devices that are installed (permanently or temporarily) in vehicles and that have the capability to transmit and receive data over the network 36.

Figure 1 shows only two users 28 and 30 associated with wireless communications devices 32 and 34. It is understood that the present disclosure contemplates hundreds or thousands of users, each of whom would have a wireless communications device, equipped as disclosed herein.

The network 36 may be any network capable of transmitting information, such as a phone or data network. A portion of the network 36 is wireless. This wireless portion may use any technology, such as cell phone or satellite technology, for exchanging information with mobile devices.

In addition to having the capability to transmit and receive data over a network, the wireless communications devices 32 and 34 also include positioning systems 38 and 40, respectively. The positioning system in each wireless communications device may use GPS, A-GPS, inertial sensors, triangulation, time-of-arrival, or any other technology to determine the position (e.g. geographic coordinates, including altitude) of the respective wireless communications device and update this position information as the communications device is moved throughout a region. Further, the positioning system in each wireless communications device may provide the geographic position information to other applications on the wireless communications device or send the geographic position information to applications located remotely.

The first user 28 and the second user 30 use their wireless communications devices 32 and 34 to participate in a parking space community sharing system 50. The parking space community sharing system 50 is a combination of hardware, software and data. The first user 28 and the second user 30 use their wireless communications devices 32 and 34 to run a parking space sharing application. The parking space sharing application is a software application that includes components 52 installed on the communications devices 32 and 34 as well as components 54 on a remote server 44. The components 52 of the parking space sharing application that are installed on the users' wireless communications devices 32 and 34 may be downloaded from an online application store, such as the Apple App Store or Nokia's Ovi web site. The components 52 of the parking space sharing application that are installed on the users' wireless communications devices 32 and 34 are stored on computer-readable media, such as flash memory cards, disks or PROMs, in the devices. Alternatively, the components may be stored as firmware. The components 52 of the parking space sharing application may be comprised of permanent or temporary software or firmware routines, modules, programs and/or instructions operable when executed to cause a physical machine or device to carry out an operation, method of procedure. The parking space community sharing system 50 allows the users to let each other know about the availability of on-street parking spaces in the area 16. Operation of the parking space community sharing system 50 is described in connection with several scenarios set forth below

### Scenario 1

Referring to Figure 1, the first user 28 is operating his vehicle 56 to leave (i.e., vacate) a parking space located at 58. Meanwhile, the second user 30 is driving his vehicle 60 along the street 14. The second user 30 is looking for a parking space to park his vehicle 60.

When the first user 28 is leaving the parking space at 58, the parking application component 52 running on the first user's mobile communications device 32 transmits a notification 64 that the parking space that the first user's vehicle 56 had been occupying has become available. The message 64 is transmitted wirelessly. The parking application component 52 may operate automatically to transmit this notification message 64. In order to transmit the notification message 64 automatically, the parking application component 52 may interface with systems in the vehicle 56 (e.g., using a cable or wireless technology) to automatically detect that the vehicle 56 has been started and that it is being operated to pull out of the parking space at 58. Alternatively, the first user 28 may operate a user interface on the mobile communications device 32 to operate the parking application component 52 to transmit this notification message 64.

When the parking application component 52 transmits the notification message 64 that the parking space that the first user's vehicle 56 had been occupying has become available, it acquires information from the positioning system 38 on the first user's mobile communications device 32 that indicates the current position of the device 32 (and hence, the vehicle 56). The parking application component 52 includes this position information in the notification message 64 that it transmits about the parking space availability.

The parking application component 52 on the user's mobile communications device may include additional information in the notification message, such as the date, time-of-day, a user ID, parking restrictions (such as parking time limits or the need for a parking permit), whether the parking space is metered, whether the space requires parallel parking, and the type (or size) of vehicle.

In one preferred embodiment, some of this information can be stored in a user profile associated with the user. For example, a user profile would include the vehicle type, size, make and/or model. In this embodiment, some or all of this information, such as the vehicle size, would be automatically made available and included in the notification message 64. The user profile could be stored as data file locally on the user's wireless communications device 32 or alternatively, the user profile may be stored remotely on the server 44. If the user profile is stored on the server, the data indicating the vehicle size would be associated with the message 64 after it is received at the server 44.

The notification 64 about the available parking space is forwarded over the network 36 to the parking application component 54 on the remote server 44. The server-based parking application component 54 extracts the information from the notification 64.

The server-based parking application component 54 maintains a log 68 that contains the notifications about available parking spaces received from all the users who operate parking application components on their mobile communications devices. The log 68 includes at least the information about the location of the available parking space and the time (date and time-of-day) at which the parking space became available. The log 68 may include any additional data about the parking space as well, such as the user ID, any parking restrictions (such as parking time limits or the need for a parking permit), whether the parking space is metered, and the type (or size) of vehicle.

When the server-based parking application component 54 stores information about the location of the available parking space, it may use a geographic database 70 to obtain additional information about the parking space. The geographic database may be stored at the server 44. For example, the server-based parking application component 54 may use the geographic database 70 to reverse geo-code the geographic coordinate information in the notification message 64 received from the first user's mobile communication device 32 to obtain a street location (or address) of the available parking space. This street information may be used to determine additional useful information about the parking space from the geographic database 70, such as hours of parking restrictions along the street, day-of-week parking restrictions along the street, any parking restrictions (such as parking time limits or the need for a parking permit) along the street, whether the parking spaces along the street are metered, etc. The geographic database 70 may also provide useful information for traveling to the parking space, such as whether there are restrictions on the kinds of vehicles that can operate on the street, whether the street is a one-way street, whether a median or barrier along the street prevents U-turns, etc. This additional information about the available parking space may be included in or referenced by the log 68.

As stated above, the second user 30 is driving his vehicle 60 along the street 14 looking for a parking space to park his vehicle 60. The second user 30 operates the parking application component 52 running on his mobile communications device 34 to transmit a request 74 for information about available parking spaces in a particular area.

The parking application component 52 running on the second user's mobile communications device 34 may request information about available parking spaces in several different ways. In one way, the request 74 seeks information about available parking spaces in the immediate area of the second user's mobile communications device 34. When operated in this way, the parking application component 52 running on the mobile communications device 34 obtains data that indicates the current position of the second user's mobile communications device 34 from the positioning system 40 and includes this position information in the request 74.

In a second way of operation, the user 30 may define an area about which information about available parking spaces is desired. This second way of operation may be used when the user has not yet reached the location where a parking space is desired. This approach may also be used for commonly visited areas, such as the user's residence or work location. This approach may also be used when the user wishes to restrict the search for parking spaces to a specific, defined area.

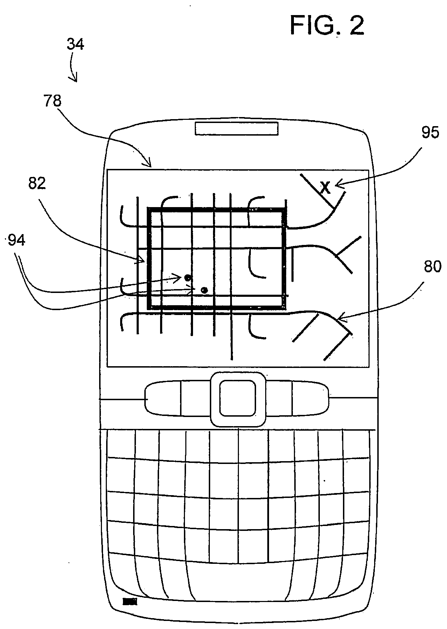

To define an area about which information about available parking spaces is desired, the user operates the parking application component 52 running on his mobile communications device 34 to bring up a map of the desired area. This may be done by panning and zooming a map displayed on a display screen of the mobile communications device 34. Referring to Figure 2, the user's mobile communications device 34 has a display screen 78 on which is displayed a map 80. The map 80 may be generated by the parking application component 52 or other software on the mobile communications device 34 using data obtained from the geographic database 70 located remotely with the server 44. Alternatively, the map 80 may be generated using data stored locally on the mobile communications device 34. As shown in Figure 2, the user can operate the mobile communications device 34 to define a geofenced area of interest 82 on the map 80. The area of interest 82 may be defined by a rectangular-shaped area, a circular area, or an area of any other shape. The area of interest may also be defined as a distance or driving time from a specified point. If the user chooses to specify a user-defined area of interest, information that defines this area of interest 82 is included (or referenced) in the request 74 transmitted by the second user's mobile communications device 34 to the server-based parking application component 54 located on the server 44.

In a present embodiment, when the second user 30 operates the parking application component 52 running on his mobile communications device 34 to transmit the request 74 for information about available parking spaces, the second user 30 may also specify parking space preferences. Among the parking space preferences that the user can specify are time-of-alert and parking space size. (These are two preferences that a user of the parking space community sharing system 50 can specify and it is understood that the parking space community sharing system 50 may support additional preferences.) The user can specify these preferences through a menu provided by the parking application component 52 located on the user's mobile communications device 30.

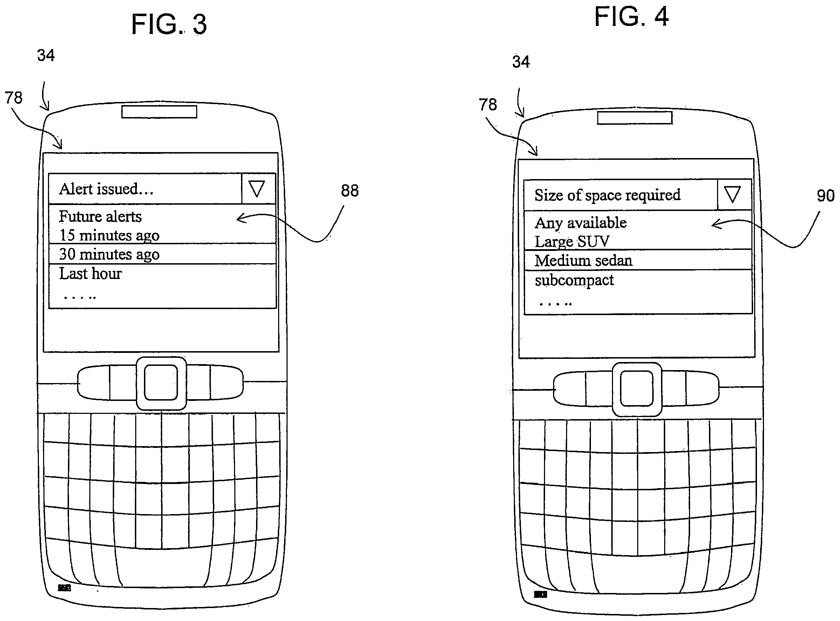

Figure 3 shows the display screen 78 of the user's mobile communications device 34. The display screen 78 includes a menu 88 for selecting a time-of-alert preference. With the time-of-alert preference, a user can specify a duration of time associated with the posting of the parking space availability notification. For example, referring to Figure 3 the menu 88 may allow the user to specify that he wants to be shown parking spaces that have become available in the area of interest within (1) the previous 15 minutes, (2) the previous 30 minutes or (3) the previous hour. Other durations of time may also be permitted. The time-of-alert preference may also allow the user to specify durations of time in the future. For example, if the user expects to arrive in the area of interest at a specific later time (e.g., 5:00 PM), the user can specify this expected time of arrival as well as a duration of time for parking space availability notification postings. According to this feature, a user may indicate that he expects to arrive at an area of interest at 5:00 PM and would like to be presented with indications of the available parking spaces posted in the half hour immediately prior to 5:00 PM. The time-of-alert preference may also allow the user to specify regularly recurring times-of-alerts. For example, if the user expects to arrive in the area of interest at a specific time every day (e.g., 7:00 PM), the user can specify this expected regularly recurring time of arrival.

Figure 4 shows the display screen 78 of the user's mobile communications device 34 with a menu 90 for selecting a parking space size preference. With the parking space size preference, a user can specify a general size of parking space desired. Referring to Figure 4, the parking space size preference menu 90 allows the user to indicate the size of parking spaces he wishes to be notified about. The parking space sizes may be defined by reference to vehicle type, such as Large SUV, Medium Sedan, Subcompact, Motorcycle, or Any Size.

Referring back to Figure 1, the server-based parking application component 54 receives the request 74 from the second user's mobile communications device 34. If the request 74 from the user 30 specified an area of interest, the server-based parking application component 54 accesses the log 68 to identify available parking spaces located in the area of interest indicated in the request 74. Alternatively, if the request 74 specified only the current position of the second user 30, the server-based parking application component 54 accesses the log 68 to identify available parking spaces in proximity (e.g., within a distance, such as a quarter mile) to the current position of the second user 30. The server-based parking application component 54 matches available parking spaces listed in the log 68 that have been reported by other users to the area of interest or the proximity of the second user. The server-based parking application component 54 also matches the available parking spaces taking into account any preferences (e.g., time duration, vehicle size) that have been specified by the user 30.

The server-based parking application component 54 then transmits data 96 to the second user's mobile communications device 34. The data 96 indicates the locations of available parking spaces in the user's area of interest that match any preferences specified by the user. The parking application component 52 running on the user's mobile communications device 34 presents this information to the user, preferably in the form a map, such as the map 80 as shown in Figure 2. The locations of the available parking spaces are shown on the map. These locations may be shown as dots 94, icons, figures or other indicia. If the user is currently in the area shown by the map, the user's location is also indicated, preferably by a distinctive color or marking 95. When displaying the available parking spaces on the map on the user's mobile communications device 34, additional information may be provided, such as the age or freshness of the available parking space notification. This freshness information may be expressed in terms of minutes to indicate how long ago the posting had been made. Alternatively, the freshness can be color coded. This information may be helpful to allow the user to evaluate whether the space is still available.

The parking application component 52 running on the user's mobile communications device 34 may allow the user to select one or more of the indicated available parking spaces, calculate a route to these spaces from the user's current position, and provide route guidance to the user to follow the calculated route.

In the present embodiment, when the second user 30 parks his vehicle 60 in a parking space that the parking space community sharing system 50 had notified him about, the application component 52 running on the user's mobile communications device 34 sends a message to the server-based parking application component 54 to indicate that the space is no longer available. The message may be sent automatically by the application component 52 running on the user's mobile communications device 34 by detecting that the user's position matches the position of the indicated available parking space and that the vehicle has been parked, i.e., turned off. Alternatively, the message may be sent by the user by operating the mobile communications device 34. When the server-based parking application component 54 receives notification that the second user has parked in the parking space he had been notified about, the server-based parking application component 54 deletes the posting for the parking space on the log 68.

### Scenario 2.

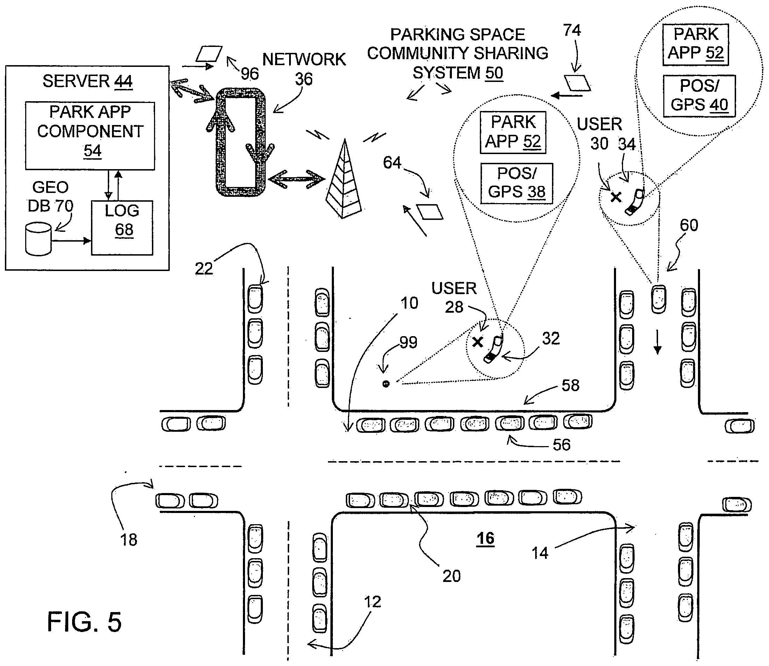

Figure 5 shows the same overhead view of several streets in urban area 16 as in Figure 1, where like numerals are used to indicate like elements. In Figure 5, the user 28 of the mobile communications device 32 has not yet pulled his car 56 out of the parking space at 58. Instead, the user 28 is located away from his vehicle at a position 99. The position 99 may be down the street from the vehicle 56. The position 99 may even be located inside the residence of the user 28.

While the user 28 is still at the position 99, the user 28 operates the parking application component 52 on his mobile communications device 32 to indicate that he is planning on operating his vehicle 56 to leave the parking space at 58 soon. The parking application component 52 may allow the user to indicate a time (e.g., 5 minutes, 10 minutes, etc.) when he will be leaving the parking space. Alternatively, the parking application component 52 may indicate that the user is planning on leaving the parking space immediately.

When the user 28 operates the parking application component 52 on his mobile communications device 32 to indicate that he will be vacating a parking space soon, the parking application component 52 sends a message to the server 44 to indicate the parking space availability in the same manner as described above. In a preferred embodiment, the parking application component 52 keeps track of the location at which the vehicle 56 had been parked so that the exact position of the soon-to-be-available parking space can be indicated in the message. If the parking application component 52 did not store the position where the vehicle 56 had been parked, it may indicate the user's current position 99 by default. Alternatively, the user 28 may operate the user interface of the mobile communications device to indicate the location 58 of the vehicle 56.

The rest of the operation of the system in Figure 5 is similar to that described in Figure 1. The person looking for a parking space, i.e., the second user 30, sends a message requesting information about available spaces in a desired area and receives information from the server-based parking application component 54 about the available spaces. An advantage of the operation of the system of Figure 5 is that second user 30 can be informed about the availability of the parking space 56 even before it becomes available. This way the second user 30 has better chance of getting the parking space before someone else takes it. The users 28 and 30 can even swap the space 58 between them.

### Commercial factors

In one present embodiment, users of the parking space community sharing system 50 may use the system free of charge. In an alternative embodiment, users may be required to pay to use the parking space community sharing system 50. For example, users may be required to pay an initial fee, an ongoing subscription fee, a fee-per-use, or any combination thereof. In another alternative, users of the parking space community sharing system may be presented advertising when they use the system. The advertising may be targeted to take into account profile information about the user (e.g., type of car) or location information (e.g., businesses located near the available parking space).

According to another embodiment, the parking space community sharing system 50 may support commercial transactions between users of the system. In one alternative, a user seeking a parking space in an area may make a payment to a user vacating a space. Such payments may be facilitated by the parking space community sharing system 50. The parking space community sharing system 50 may use PayPal or other means of payment transaction processing for this purpose.

In yet another embodiment, the parking space community sharing system 50 may facilitate auctioning of parking spaces between users. According to this embodiment, a user vacating a parking space may seek bids from other users who want to park in the space. The parking space community sharing system 50 would manage such auctions including establishing times for the opening and closing of bidding, notifying the winners and losers, enabling the payment transactions, and managing the parking space swap. Similarly, the parking space community sharing system 50 could enable transactions in which a user seeking a parking space would seek offers from users vacating their parking spaces. The user seeking a parking space could then evaluate the amounts of the offers taking into account the relative convenience of the locations of the offered parking spaces.

In a further embodiment, the parking space community sharing system 50 may actually enable the creation of available parking spaces. In this embodiment, if there are no users vacating parking spaces in a specific area in which a user is seeking a parking space, the parking space community sharing system 50 would send a message to all users whose vehicles are parked in the area indicating that another user is seeking a parking space and, optionally, how much that user is willing to pay for it. In this embodiment, a user who otherwise would not vacate a parking space in an area would be induced to do so if provided with sufficient financial incentive. The parking space community sharing system 50 would help the user vacating a parking space to find another space further away.

In any alternatives that involve payments between users, the parking space community sharing system 50 may take a percentage or fixed amount of the transaction as a service fee.

### Further considerations

As stated above, when the server-based parking application component 54 maintains the log 68 of available parking spaces, it keeps track of the time that the parking space became available. The server-based parking application component 54 may delete parking spaces after a period of time.

As mentioned above, the parking space community sharing system 50 uses a server 44 that runs part of the parking space sharing application. The parking space community sharing system 50 may service one urban area or may service a plurality of urban areas. If the parking space community sharing system 50 services a plurality of communities, the server 44 may organize postings about available parking spaces into separate lists, each of which would include the postings for separate urban areas. Separate lists may also be provided for different sub-areas within an urban area.

The parking space community sharing system provides an incentive to users to participate in the system. The benefit to a person looking for a parking space is clear, i.e., he gets a parking space. A user leaving a parking space has an incentive to let the community know about the available space because (1) other members of the community will reciprocate when that user needs a parking space again and (2) if the parking space is turned over to another member of the user community, it is more likely that the first user will be notified when the space becomes available again.

In a present embodiment, the parking space community sharing system keeps track of the members' usage of the system to determine compliance with the sharing principles of the community, i.e., whether any user regularly fails to report the availability of a parking space available when he leaves it. This may be accomplished by matching when a user takes a space and leaves a space. If a user regularly fails to notify the system when he leaves a space, he may be provided a warning, followed by suspension or expulsion from the community, if necessary.

### Alternatives.

The disclosed embodiments have been described in connection with finding on-street parking in urban areas. The system could also be used to find parking spaces in shopping mall parking lots. Although shopping mall parking lots generally have much available parking, many drivers prefer to park close to a particular store or entrance to the mall. The disclosed system and method could be used to help drivers in shopping mall parking lots find spaces close to a particular store or entrance. The disclosed system for community sharing of parking spaces can also be used for parking at airport parking lots.

Although the system described above includes a server that runs an application that keeps track of available parking spaces, the system could be implemented as a distributed system, without a server component, or alternatively as a peer-to-peer system.

In the above embodiments, the users of the parking space community sharing system 50 were described as persons who operate wireless communications devices, such as smart phones. In a further alternative, the parking space community sharing system 50 can be used by persons from non-mobile devices. In an example of this alternative, a user may want to help visitors traveling to his residence or place of business find on-street parking spaces nearby. In this example, the user may access the parking space community sharing system 50 from a non-mobile device, e.g., a personal computer. The non-mobile device would be connected to the data network so that it can access the server operated by the parking space community sharing system 50 or a web site associated therewith. The non-mobile user seeking parking spaces around his residence or business would use the parking space community sharing system 50 in the same manner as a mobile user seeking a parking space, including the step of identifying the desired area. Once the parking space community sharing system 50 identifies available parking spaces, the non-mobile user would then communicate (e.g., by cellular phone) the information about the available parking spaces to the visitors traveling to his residence.

It was stated above that the parking space community sharing system 50 can store a user profile associated with each user that contains information such as the user's vehicle type, size, make and/or model, as well as other information. This user profile may be used for targeted advertising purposes, either in connection with finding parking spaces or otherwise.

It is intended that the foregoing detailed description be regarded as illustrative rather than limiting and that it is understood that the following claims including all equivalents are intended to define the scope of the invention.

## Claims

1. A portable wireless communications device (32, 34) comprising a feature that
(1) transmits a message indicating that an on-street parking space (58) that is occupied by a vehicle (56) operated by a user (28) of the portable wireless communication device will become available, following an indication from the user, via a user interface of the portable wireless communications device and when located away from the vehicle, that they will be vacating the parking space, wherein the message also indicates the location at which the vehicle was parked in the parking space as determined by a positioning system of the portable wireless communications device and as stored by the portable wireless communications device and
(2) receives notifications that on-street parking spaces in a desired area will become available when other users (30) of portable wireless communications devices that have the same feature indicate that on-street parking spaces (58) occupied by vehicles operated by the other users (28) will become available.

2. The portable wireless communications device of claim 1, wherein the feature further allows a user to indicate when they will be vacating the parking space.

3. The portable wireless communication device of Claim 1 wherein the feature further allows the user to specify the desired area, or wherein the feature determines the desired area to be an area around the user.

4. The portable wireless communication device of Claim 3 further comprising:
a positioning system that determines the area around the user.

5. The portable wireless communication device of Claim 1 wherein the feature further indicates how long each available on-street parking space has been posted or wherein the feature further allows specification of how long each available on-street parking space has been posted.

6. The portable wireless communication device of Claim 1 wherein the feature further allows identification of available on-street parking spaces of a specified size.

7. The portable wireless communication device of Claim 1 wherein the feature further provides route guidance to at least one of the on-street parking spaces in the desired area.

8. A software application stored on computer-readable media in portable communications devices (32, 34), wherein the software application
enables each user of one of the portable communications devices to indicate, via a user interface of the portable communications device and when located away from the vehicle, and to transmit notice that they will be vacating an on-street parking space (58) and a position thereof, wherein the position is the location at which the vehicle was parked in the parking space as determined by a positioning system of the portable wireless communications device and as stored by the portable wireless communications device, and
further that allows each user of one of the portable communications devices to receive notification of positions of parking spaces that will be made available by others of the users of the portable communications devices when said others provide notice that they will be vacating on-street parking spaces.

9. The software application of claim 8, wherein the software application further allows a user to indicate when they will be vacating the parking space.

10. The software application of Claim 8 further comprising a feature that enables a user to specify a desired area about which to receive notification of positions of parking spaces made available by others of the users of the portable communications devices when said others transmit notice that they will be vacating on-street parking spaces.

11. The software application of Claim 8 further comprising a feature that provides route guidance for a user to travel to at least one of the parking spaces made available by others of the users when said others provide notice that they will be vacating on-street parking spaces.

12. The software application of Claim 8 further comprising a feature that calculates a route for a user to travel to at least one of the parking spaces made available by others of the users when said others provide notice that they will be vacating on-street parking spaces.

13. A system for informing users of portable communications devices (32, 34) about available on-street parking spaces (58) for vehicles, the system comprising:
a plurality of portable communications devices of Claim 1.

14. A computer-implemented method of finding on-street parking comprising:
using a portable communications device (32, 34):
to receive notification of positions of parking spaces (58) that will be made available by other users of portable communications devices when other users indicate, via a user interface of their portable communications device and when located away from their vehicle, that they will be vacating on-street parking spaces, and
to notify others, following an indication via a user interface of the portable wireless communications device and when located away from the vehicle, that the user of the portable communications device will be vacating an on-street parking space and a position thereof, wherein the position is the location at which the vehicle was parked in the parking space as determined by a positioning system of the portable communications device and as stored by the portable communications device.

## Patentansprüche

1. Tragbare drahtlose Kommunikationsvorrichtung (32, 34), umfassend eine Funktion, die (1) eine Nachricht überträgt, welche angibt, dass ein Stellplatz (58) auf der Straße, welcher von einem Fahrzeug (56) belegt ist, das von einem Benutzer (28) der tragbaren drahtlosen Kommunikationsvorrichtung betrieben wird, frei werden wird, nach einer Mitteilung des Benutzers über eine Benutzerschnittstelle der tragbaren drahtlosen Kommunikationsvorrichtung und wenn er sich außerhalb des Fahrzeugs befindet, dass er den Stellplatz verlassen wird, wobei die Nachricht auch die Lage angibt, an der das Fahrzeug auf dem Stellpatz geparkt wurde, wie von einem Ortungssystem der tragbaren Kommunikationsvorrichtung bestimmt und von der tragbaren Kommunikationsvorrichtung gespeichert wurde, und (2) Benachrichtigungen darüber empfängt, dass Stellplätze auf der Straße in einem gewünschten Bereich frei werden sollen, wenn andere Benutzer (30) von tragbaren drahtlosen Kommunikationsvorrichtungen, die dieselbe Funktion aufweisen, angeben, dass Stellplätze (58) auf der Straße, die von Fahrzeugen belegt sind, die von den anderen Benutzern (28) betrieben werden, frei werden werden.

2. Tragbare drahtlose Kommunikationsvorrichtung nach Anspruch 1, wobei mit dieser Funktion der Benutzer ferner angeben kann, wann er den Stellplatz frei machen wird.

3. Tragbare drahtlose Kommunikationsvorrichtung nach Anspruch 1, wobei die Funktion es dem Benutzer ferner ermöglicht, den gewünschten Bereich zu spezifizieren, oder wobei die Funktion den gewünschten Bereich als einen Bereich in der Nähe des Benutzers bestimmt.

4. Tragbare drahtlose Kommunikationsvorrichtung nach Anspruch 3, die ferner Folgendes umfasst:
ein Ortungssystem, das den Bereich in der Nähe des Benutzers bestimmt.

5. Tragbare drahtlose Kommunikationsvorrichtung nach Anspruch 1, wobei die Funktion ferner angibt, seit wann jeder der verfügbaren Stellplätze auf der Straße gepostet ist, oder wobei die Funktion ferner die Angabe von Informationen darüber ermöglicht, seit wann jeder der verfügbaren Stellplätze auf der Straße gepostet ist.

6. Tragbare drahtlose Kommunikationsvorrichtung nach Anspruch 1, wobei die Funktion ferner eine Identifizierung von freien Stellplätzen auf der Straße mit einer bestimmten Größe ermöglicht.

7. Tragbare drahtlose Kommunikationsvorrichtung nach Anspruch 1, wobei die Funktion ferner eine Routenführung zu mindestens einem der Stellplätze auf der Straße in dem gewünschten Bereich bereitstellt.

8. Softwareanwendung, die auf computerlesbare Medien in tragbaren Kommunikationsvorrichtungen (32, 34) gespeichert ist, wobei die Softwareanwendung jedem Benutzer einer der tragbaren Kommunikationsvorrichtungen ermöglicht, über eine Benutzerschnittstelle der tragbaren Kommunikationsvorrichtung und wenn er sich außerhalb des Fahrzeugs befindet anzugeben und mitzuteilen, dass er einen Stellplatz (58) auf der Straße frei machen wird, sowie dessen Lage, wobei die Lage der Ort ist, an dem das Fahrzeug auf dem Stellplatz geparkt wurde, wie von einem Ortungssystem der tragbaren drahtlosen Kommunikationsvorrichtung bestimmt und von der tragbaren drahtlosen Kommunikationsvorrichtung gespeichert wurde, und die es jedem Benutzer einer der tragbaren Kommunikationsvorrichtungen ferner ermöglicht, eine Benachrichtigung über die Lage von Stellplätzen zu erhalten, die von anderen Benutzern der tragbaren Kommunikationsvorrichtungen frei gemacht werden werden, wenn die anderen Benutzer mitteilen, dass sie einen Stellplatz auf der Straße frei machen werden.

9. Softwareanwendung nach Anspruch 8, wobei die Softwareanwendung es einem Benutzer ferner ermöglicht, anzugeben, wann er den Stellplatz frei machen wird.

10. Softwareanwendung nach Anspruch 8, ferner umfassend eine Funktion, die es einem Benutzer ermöglicht, einen gewünschten Bereich zu bestimmen, zu welchem er Benachrichtigungen zu Stellplatzorten, die von anderen der Benutzer der tragbaren Kommunikationsvorrichtung frei gemacht werden werden, erhalten möchte, wenn die anderen Benutzer mitteilen, dass sie einen Stellplatz auf der Straße frei machen werden.

11. Softwareanwendung nach Anspruch 8, ferner umfassend eine Funktion, die eine Routenführung für einen Benutzer bereitstellt, um zu mindestens einem der von anderen Benutzern frei gemachten Stellplätze zu fahren, wenn die anderen Benutzer mitteilen, dass sie einen Stellplatz auf der Straße frei machen werden.

12. Softwareanwendung nach Anspruch 8, ferner umfassend eine Funktion, die eine Route berechnet, damit ein Benutzer zu mindestens einem der von anderen Benutzern frei gemachten Stellplätze fahren kann, wenn die anderen Benutzer mitteilen, dass sie einen Stellplatz auf der Straße frei machen werden.

13. System zum Informieren der Benutzer von tragbaren Kommunikationsvorrichtungen (32, 34) über freie Stellplätze (58) auf der Straße für Fahrzeuge, wobei das System Folgendes umfasst:
mehrere tragbare Kommunikationsvorrichtungen nach Anspruch 1.

14. Computerimplementiertes Verfahren zum Finden von Stellplätzen auf der Straße, umfassend:
Verwenden einer tragbaren Kommunikationsvorrichtung (32, 34):
um eine Benachrichtigung über die Lage von Stellplätzen (58) zu erhalten, die von anderen Benutzern von tragbaren Kommunikationsvorrichtungen frei gemacht werden werden, wenn andere Benutzer, die sich außerhalb ihres Fahrzeugs befinden, über eine Benutzerschnittstelle ihrer tragbaren Kommunikationsvorrichtung angeben, dass sie einen Stellplatz auf der Straße frei machen werden, und
um, nach einer Mitteilung über eine Benutzerschnittstelle der tragbaren drahtlosen Kommunikationsvorrichtung und wenn sich der Benutzer außerhalb des Fahrzeugs befindet, anderen mitzuteilen, dass der Benutzer der tragbaren Kommunikationsvorrichtung einen Stellplatz auf der Straße frei machen wird und um dessen Lage anzugeben, wobei die Lage der Ort ist, an dem das Fahrzeug auf dem Stellplatz geparkt wurde, wie von einem Ortungssystem der tragbaren Kommunikationsvorrichtung bestimmt und von der tragbaren Kommunikationsvorrichtung gespeichert wurde.

## Revendications

1. Dispositif de communication sans fil portable (32, 34) comprenant une fonction qui (1) transmet un message indiquant qu'une place de stationnement sur rue (58), qui est occupée par un véhicule (56) exploité par un utilisateur (28) du dispositif de communication sans fil portable, deviendra disponible suite à une indication de l'utilisateur, par l'intermédiaire d'une interface utilisateur du dispositif de communication sans fil portable, et lorsqu'il se trouvera loin du véhicule, qu'il quittera la place de stationnement, dans lequel le message indique également l'emplacement auquel le véhicule était stationné dans la place de stationnement tel que déterminé par un système de positionnement du dispositif de communication sans fil portable et tel que stocké par le dispositif de communication sans fil portable et (2) reçoit des notifications selon lesquelles des places de stationnement sur rue dans une zone souhaitée deviendront disponibles lorsque les autres utilisateurs (30) de dispositifs portables de communication sans fil présentant la même fonction indiquent que des places de stationnement sur rue (58) occupées par les véhicules exploités par les autres utilisateurs (28) seront disponibles.

2. Dispositif de communication sans fil portable selon la revendication 1, dans lequel la fonction permet en outre à l'utilisateur d'indiquer quand il quittera la place de stationnement.

3. Dispositif de communication sans fil portable selon la revendication 1, dans lequel la fonction permet en outre à l'utilisateur de spécifier la zone souhaitée, ou dans lequel la fonction détermine que la zone souhaitée est une zone entourant l'utilisateur.

4. Dispositif de communication sans fil portable selon la revendication 3, comprenant en outre :
un système de positionnement qui détermine la zone autour de l'utilisateur.

5. Dispositif de communication sans fil portable selon la revendication 1, dans lequel la fonction indique en outre pendant combien de temps chaque place de stationnement disponible sur rue a été affichée ou dans lequel la fonction permet en outre de spécifier combien de temps chaque place de stationnement disponible sur rue a été affichée.

6. Dispositif de communication sans fil portable selon la revendication 1, dans lequel la fonction permet en outre l'identification de places de stationnement sur rue d'une dimension spécifiée.

7. Dispositif de communication sans fil portable selon la revendication 1, dans lequel la fonction fournit en outre un guidage d'itinéraire à au moins une place des places de stationnement sur rue dans la zone souhaitée.

8. Application logicielle stockée sur un support lisible par ordinateur dans des dispositifs de communication portables (32, 34), l'application logicielle permettant à chaque utilisateur de l'un des dispositifs de communication portables d'indiquer, par l'intermédiaire d'une interface utilisateur du dispositif de communication portable et lorsqu'il se trouve loin du véhicule, et de transmettre un avis qu'il quittera une place de stationnement sur rue (58) et une position de celle-ci, dans laquelle la position est l'emplacement auquel le véhicule était stationné dans la place de stationnement selon la détermination par un système de positionnement du dispositif de communication sans fil portable et le stockage par le dispositif de communication sans fil portable, et en outre qui permet à chaque utilisateur de l'un des dispositifs de communication portables de recevoir une notification des positions des places de stationnement qui seront mises à disposition par d'autres utilisateurs des dispositifs de communication portables lorsque lesdits autres fournissent un avis qu'ils quitteront les places de stationnement sur rue.

9. Application logicielle selon la revendication 8, l'application logicielle permettant en outre à l'utilisateur d'indiquer quand il quittera la place de stationnement.

10. Application logicielle selon la revendication 8 comprenant en outre une fonction qui permet à un utilisateur de spécifier une zone souhaitée pour recevoir une notification de position de places de stationnement mises à disposition par d'autres utilisateurs des dispositifs de communication portables lorsque lesdits autres utilisateurs transmettent un avis qu'ils quitteront des places de stationnement sur rue.

11. Application logicielle selon la revendication 8, comprenant en outre une fonction qui fournit un guidage d'itinéraire à un utilisateur pour lui permettre de se rendre à au moins l'une des places de stationnement mises à disposition par d'autres utilisateurs lorsque lesdits autres utilisateurs transmettent un avis qu'ils quitteront des places de stationnement sur rue.

12. Application logicielle selon la revendication 8, comprenant en outre une fonction qui calcule un itinéraire pour un utilisateur pour lui permettre de se rendre à au moins l'une des places de stationnement mises à disposition par d'autres utilisateurs lorsque lesdits autres utilisateurs transmettent un avis qu'ils quitteront des places de stationnement sur rue.

13. Système d'information d'utilisateurs de dispositifs de communication portables (32, 34) sur les places de stationnement disponibles sur rue (58) pour véhicules, le système comprenant :
une pluralité de dispositifs de communication portables selon la revendication 1.

14. Procédé mis en oeuvre par ordinateur, permettant de trouver une place de stationnement sur rue, consistant à :
utiliser un dispositif de communication portable (32, 34) :
recevoir la notification des positions des places de stationnement (58) qui seront mises à disposition par d'autres utilisateurs de dispositifs de communication portables lorsque d'autres utilisateurs indiquent, par l'intermédiaire d'une interface utilisateur de leur dispositif de communication portable, et lorsqu'ils se trouvent loin de leur véhicule, qu'ils quitteront des places de stationnement sur rue, et
à notifier à d'autres personnes, à la suite d'une indication par l'intermédiaire d'une interface utilisateur du dispositif de communication sans fil portable et lorsqu'il se trouve loin du véhicule, que l'utilisateur du dispositif de communication portable quittera une place de stationnement sur rue et une position de celle-ci, la position étant l'emplacement auquel le véhicule était stationné dans la place de stationnement selon la détermination par un système de positionnement du dispositif de communication portable et le stockage par le dispositif de communication portable.
